Europäisches Patentamt

European Patent Office

Office européen des brevets

(11) Publication number: **0 152 923**
**B1**

(12) **EUROPEAN PATENT SPECIFICATION**

(45) Date of publication of patent specification: **27.12.90**

(21) Application number: **85101639.4**

(22) Date of filing: **14.02.85**

(51) Int. Cl.⁵: **G 01 G 13/06,** G 01 G 11/12,
G 01 G 23/12

(54) Device for portioning products.

(30) Priority: **16.02.84 JP 19795/84 u**

(43) Date of publication of application:
**28.08.85 Bulletin 85/35**

(45) Publication of the grant of the patent:
**27.12.90 Bulletin 90/52**

(84) Designated Contracting States:
**DE FR GB IT**

(56) References cited:
**EP-A-0 084 962**
**EP-A-0 097 530**
**FR-A-2 180 011**
**US-A-3 957 126**
**US-A-4 308 928**

(73) Proprietor: **KABUSHIKI KAISHA ISHIDA KOKI
SEISAKUSHO**
**44, Sanno-cho, Shogoin Sakyo-ku**
**Kyoto-shi Kyoto-fu (JP)**

(72) Inventor: **Nakamura, Toru**
**12-8, Sawafuchi-cho Kamitakano Sakyo-ku**
**Kyoto-shi Kyoto-fu (JP)**

(74) Representative: **Grams, Klaus Dieter, Dipl.-Ing.
et al
Patentanwaltsbüro Tiedtke-Bühling-Kinne-
Grupe-Pellmann-Grams-Struif Winter-Roth
Bavariaring 4
D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of the invention

#### 1. Field of the invention

The disclosed technology belongs to the field of weighing the amount of products supplied to a feeder of a computerised device for portioning products which measures off required amounts when packaging granular products commonly handled on the market, such as peanuts.

#### 2. Description of the prior art

As it is commonly known, granular or bulk products, such as peanuts, are handled in large quantities on the commodity market. In order to display and sell such goods as merchandise, for example in supermarkets, the products must be packaged in required unit weights into package trays or polyethene bags in the backyard. Needless to say, shortage in weight must be avoided at all means, while overweight is undesirable in such cases, thus demanding a measurement of minimum positive overweight.

Since weighing manually cannot possibly meet all the requirements of weight measurement including packaging of diverse merchandise in large quantities quickly and accurately, weighing devices equipped with electrically vibrating troughs in the feeder are being developed, in which measure hoppers in the weighing section are supported on load cells which are in turn electrically connected to a computer to measure off the most desirable, minimum positive overweight. Various technologies relating to the details of such devices are also being developed.

On computerised devices for portioning products such as described above, the weighing in measure hoppers by load cells is made with their lids shut, thus approximately restricting entry of products to be weighed, resulting in a so-called intermittent weighing where the form of flow measurement is not taken. Hence, naturally, a form of intermittent feeding by a conveyor is also adopted at the feeder. Therefore vibrational feeding has been adopted at the feeder for supplying the products to the following weighing section.

The intermittent feeding from the conveyor to the feeder, and vibrational feeding from the feeder to the weighing section has posed various problems.

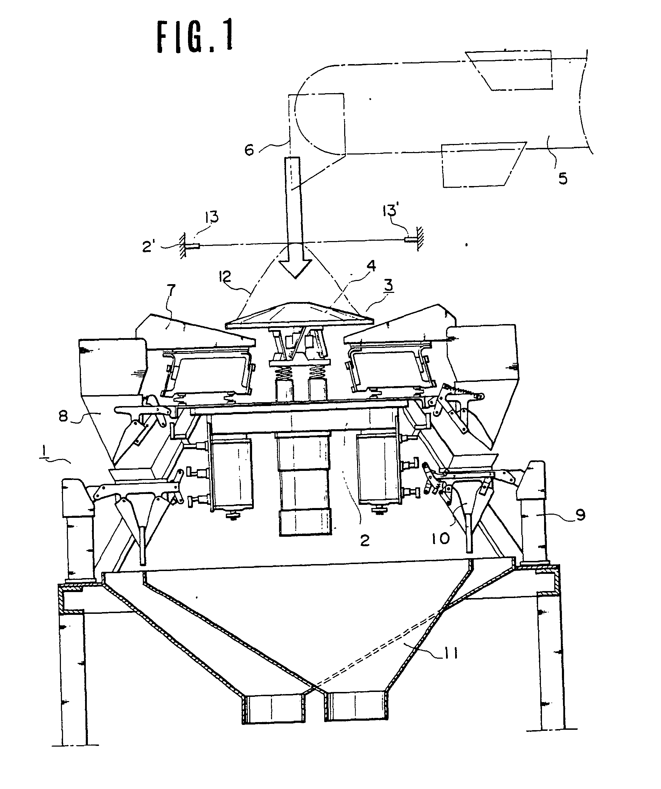

For example, in a commonly known multiple head computerised device 1 for portioning products with 10 to 15 heads, shown in Figure 1, the products to be weighed such as peanuts, not shown, are dropped from a discharging end 6 of a bucket conveyor 5 placed above an electrically vibrating distribution table 4 of a feeder 3 located on the top part of a framework 2, and is dispersed in radial direction under circumferential vibration of the distribution table 4, to be discharged into electrically vibrating radial troughs 7, 7... placed adjacent to the perimeter of the distribution table 4, and further into pool hoppers 8 suspended on the framework 2 and each corresponding to one radial trough 7. The products are then discharged into measure hoppers 10 supported on load cells 9 mounted on the framework 2, where its weight is detected by a strain gauge in the load cell 9 and supplied to a computer not shown. The computer performs necessary calculations to determine the combination of weights, and trap doors on the measure hoppers selected for the combination are opened to discharge their contents down a chute 11 below for transfer to the packaging stage by a conveyor.

In such a device, the number of measure hoppers 10, 10... to take part in the weight combination among available measure hoppers 10, 10... is fixed (although the actual number of hoppers to participate may differ each time), and because the weight of the products to be discharged in each weight combination is decided as set weight and equal to the required value, the weight of the products to be dropped from the bucket conveyor 5 onto the distribution table 4 is selected to match this value. That is, since the weight combination and discharging is performed intermittently at the weighing section, the dropping of the products from the bucket conveyor 5 onto the distribution table 4 of the feeder 3 is also made intermittently to match the discharge.

The feed rate of the products to be weighed dropped from the bucket conveyor 5 onto the distribution table 4 of the feeder 3 is controlled, according to prior art, by detecting the presence of products with photoelectric sensors 13, 13' which act to stop the drive of the bucket conveyor 5 when the light beam is obstructed, and to restart the drive of the bucket conveyor 5 to drop the products when the light is unobstructed, so that the feed rate matches the intermittent weight combination and discharging at the measurement section.

However, because the amount of products 12 to be measured which is piled on the distribution table 4 of the feeder 3 is measured, according to prior art, by the height between the levels of the distribution table 4 and the photoelectric sensors 13, 13' or, in terms of volume, as shown in Figure 1, there exists the problem of the relationship between its height and weight not being linear due to fluctuation in slope face inclination caused by the vibration of the distribution table 4. Also as the control becomes more sensitive, there arises the problem of fluttering of light beam at peak of piled products 12, while there also exist places where the volume cannot be measured at the boundary between the perimeter of the distribution table 4 and the adjoining radial troughs 7, 7,... .

Therefore, there exists instability at the delivery point from the feeder 3, which including the distribution table 4 and pool hoppers 8, to measure hoppers 10, leading to cases where the most desirable combination may not be achieved with certainty in weight combination.

Such short comings are caused by the irrationality of the discharging of weight combinations at the weighing section being made strictly in terms of weight whereas at the feeder, intermittent feeding in terms of volume is being made, intermittent measurements of totally different dimensions being made at the entrance and exit of a unique flow.

Also, although there exists the potential of controlling the rate of vibrational feeding against pool hoppers 8, 8..., since the feeding against pool hoppers 8 and measure hoppers are intermittent as has been explained, this was not possible because the intermittent feeding and discharging were made in terms of totally different dimensions.

Summary of the invention

The object of the present invention is to solve the problem of volumetric intermittent feeding at the feeder which does not match the weight combination and intermittent discharging by computerised devices for portioning products according to the aforementioned prior art, and to provide an improved device for portioning products useful in measurement related fields in the commodity industry, which measures the flow at both entrance and exit of the device in terms of weight, to ensure a stable supply of the products to be weighed to the weighing section, and to enable reliable and accurate weight measurements.

This object is according to the invention achieved by a device for portioning products comprising the features of the characterzing portion of claim 1.

By providing a weight measuring unit in the feeder of a computerised device for portioning products, the starting and stopping of the conveyor to feeder can be controlled by accurately measuring the feed weight, to match the intermittent discharging at the weighing section by preset unit weights.

Since, the feed weight can be measured accurately at the feeder, the instability in linearity between the weight and height detections is avoided, thus enabling measurement of feed weight compatible to the intermittent discharging, and controlling of conveyor.

Hence, as the flow of the products to be weighed at the feeder or at transfer points in accordance to intermittent discharging at the weighing section becomes more stable in weight, the weighing and weight combination in accordance to the intermittent discharging at weighing section can be made precisely as designed.

Depending on design, because the weight measuring device in the feeder can control not only the driving of conveyor to feeder by using a low-pass filter, but also the vibrational feeding by extracting the vibration using a high-pass filter, the flow of mass through the feeder or at transfer points matching the intermittent discharge at the measurement section can be made to agree with one another and to be stable, as a consequence.

In contrast to the inventional device for portioning products in the case of the known device for portioning products into quantities the photoelectric sensors located above the feeder serve for starting the supply of products to the feeder as soon as an optical contact between the two photoelectric sensors occurs. On interruption of this optical contact the supply is stopped. The inventional device differs therefrom fundamentally in as much as the amount of products on the feeder is measured exactly and the supply of products to the feeder is controlled according to the difference between the required amount and the actual amount of the products on the feeder. In the case of the known device the switching on or off of the conveyor which loads the feeder is the result of a simple Yes/No decision, i.e. whether there is an optical contact between the two photoelectric sensors or whether it is interrupted. A detection of the amount of products on the feeder does not take place.

The weighing device described in the US—A— 4 308 928 measures the weight of an article or a charge before it is transferred to the feeder and stores this measured value in a control unit. This weighing device does not comprise weighing hoppers suited for detecting the weight of the charge in these and disposed above the pool hoppers but the article or the charge supplied to the feeder is fed unchanged to a pool hopper by means of the feeder. The weight measuring device of this weighing device does not measure a fed amount of products which is to be divided up into portions but already measures the weight of a product or a product charge which is fed as such into a single pool hopper. This means that the weighing device of the US—A—4 308 928 is already loaded with preportioned charges of which the weighing device only detects the weight and which are then fed into one pool hopper each. A weight measuring device which, like in the case of the invention, detects the weight of a product amount which is supplied to a feeder and is to be divided up is not provided in the case of the US—PS 4 308 928.

US—A—3 957 126 reveals a feed control system providing adjustment of feed rate in relation to the weight. The known feed control system comprises separate weight detecting means which control the feed rate adjusting means thus weighing the feed and adjusting the feed rate in dependency of the measured weight.

In case of US—A—3 957 126 and US—A— 4 308 928 the weight measuring device and the control unit controlling the conveyor are influenced by disturbance variables occurring due to the conveying drive's being an electromagnetic vibrator, or due to the dropping down of the products onto the feeder.

FR—A—2 180 011 shows a weight measuring device which is connected to a control unit via a low-pass filter and is mounted on the floor as a separate apparatus unit. A complete integration of the weight measuring device into the device for portioning products is not provided. The support of the spring activating electromagnetic vibrator on the balance weight in connection with the arrangement according to the invention of the weight measuring device between the balance weight and the frame work renders possible an exact detection of measured values by the weight measuring device. Thereby both the dynamic loads occurring due to the charge of the feeder with products and the loads of vibration occurring in the action of the electromagnetic vibrator and damped by the balance weight are transmitted to the weight measuring device and the remaining deviations falsifying the result of measurement are filtered out by the low-pass filter located between the load cell of the weight measuring device and the control unit. Thus, the input values transmitted to the control unit become so exact that an exact control of the conveyor is possible for the charge of the feeder.

Brief description of the drawings

Figure 1 is an explanatory diagram of feed measurement at the prior art device for portioning products.

Figure 2 is an overall flow diagram in outline of one of the inventional embodiments of a device for portioning products.

Figure 3 is a side view of mechanisms of the device of Figure 2.

Figure 4 is a partly enlarged view of the device shown in Figure 3.

Figure 5 is a schematic of Figure 4.

Figures 6 to 10 are schematics corresponding to Figure 5 of other embodiments.

Figure 11 is a graph showing the relationship between the feed weight signal and the vibration signal at the feeder.

Detailed description of the preferred embodiment

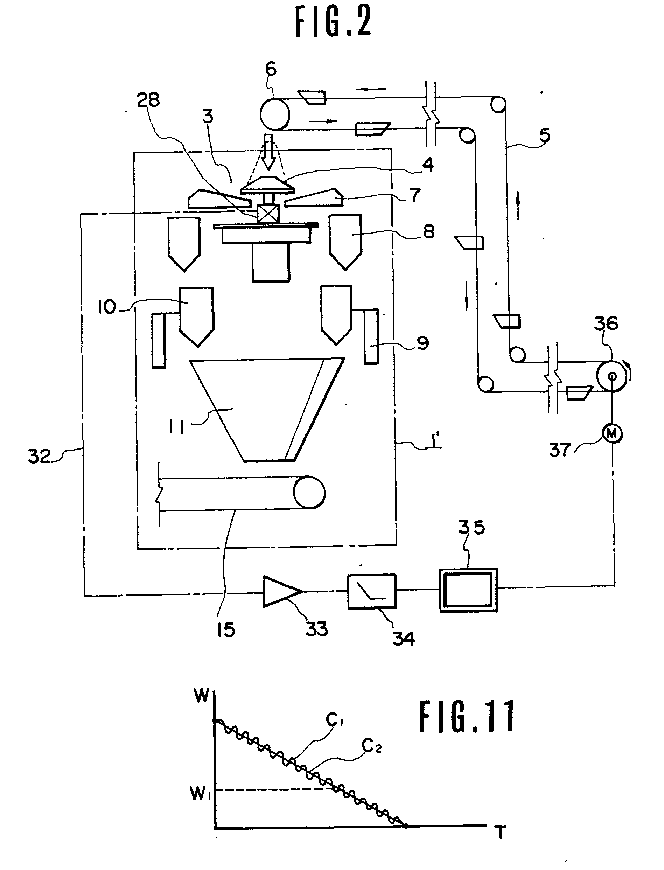

In the embodiment shown in Figures 2 to 5, 1' indicates a computerised device for portioning products of the present invention, with a 10 to 15 head weighing section on a framework 2 in a circular layout below and concentric to a discharging end portion 6 of a bucket conveyor 5.

A feeder 3 located on the top part of framework 2 has a distribution table 4 immediately below the discharging end portion 6 of bucket conveyor 5, with radial troughs 7, 7..., each corresponding to said weighing heads, along its perimeter and mounted on the framework 2 through electromagnetic vibrators 14, 14... of commonly known type.

Below each radial trough 7 is connected a corresponding pool hopper 8 mounted on the framework 2, and below each pool hopper 8 is connected a corresponding weighing hopper 10 mounted on a commonly known load cell 9 which are fixed to the framework 2. Each weighing hopper 10 adjoins a chute 11 on lower level to discharge their contents onto a conveyor 15 which transfers the products 12 to the next, packaging process.

In practice, the weighing hoppers 10 frequently discharge directly into a packaging machine instead of being connected to conveyor 15.

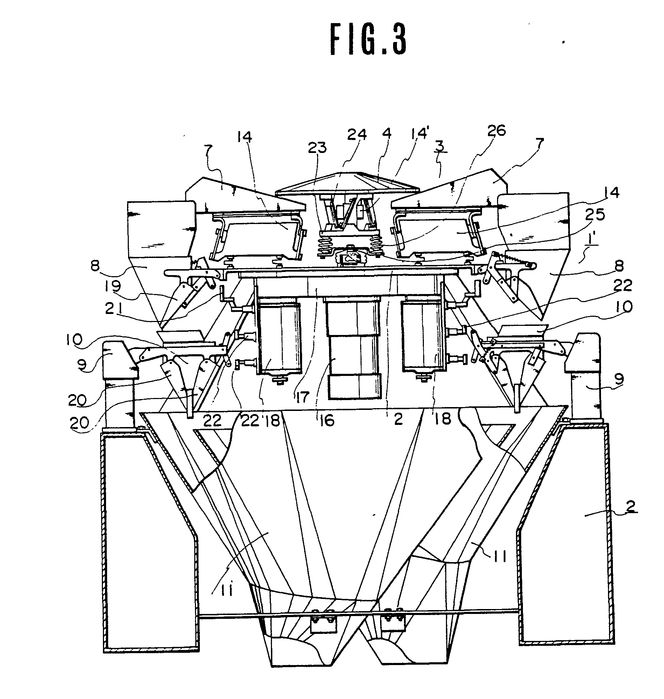

In Figure 3, 16 indicates a drive motor which operates push rods 21, 22, 22 which in turn operate trap doors 19 and 20 on pool hoppers 8 and weighing hoppers 10.

The distribution table 4, as indicated in Figure 3, is mounted on a balance weight 23 through inclined leaf springs 24, and is equipped with a commonly known electromagnetic vibrator 14' which causes both vertical and circumferential oscillation, the balance weight 23 being mounted on a plate 25 located below through a number of cushion springs 26 distributed around the circumference.

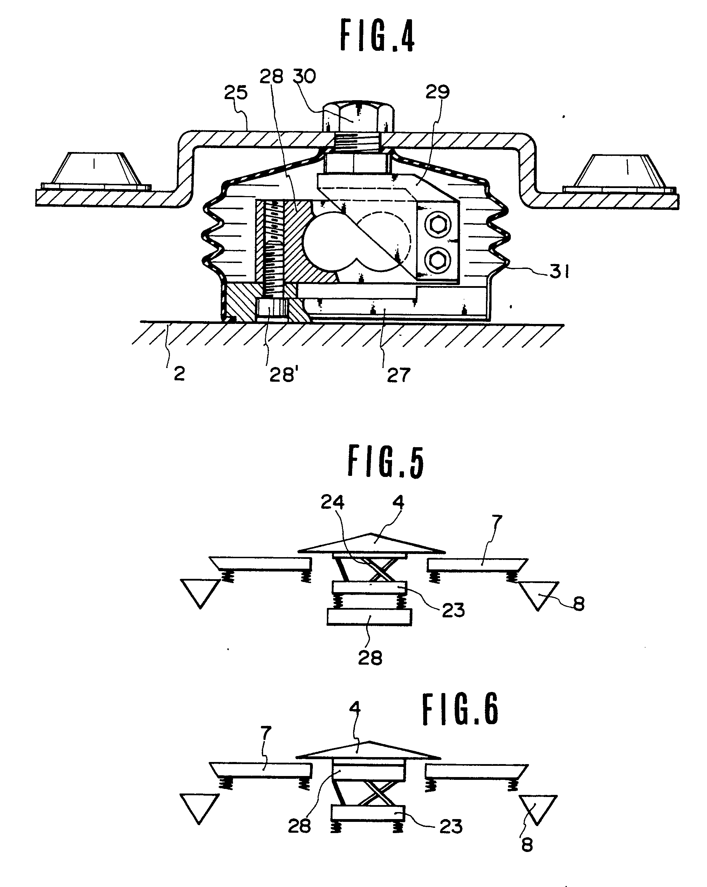

The plate 25, as indicated in Figure 4 in detail, is fixed by a bolt 30 to a bracket 29 fixed by means of bolts 28' to a load cell 28 which in turn is fixed also by bolts 28' to a disc shaped mounting plate 27 fixed to framework 2. A dust boot 31 is provided to enclose the space between the lower face of plate 25 and the upper face of framework 2.

Thus the load cell 28 is subjected through plate 25 to vibrations both from the weight of the products 12 being dropped on the distribution table 4 by bucket conveyor 5, and from the high frequency oscillation of the electromagnetic vibrator 14'.

For this reason, as shown in Figure 2, the output from the load cell 28 is connected to an amplifier 33 via a lead 32, then fed through a low-pass filter 34 before entering a control unit 35 to control a motor 37 of a drive unit 36 for a bucket conveyor 5.

Preferred embodiment of the invention —
Operation

With a device constructed as described above, when an unindicated start button is pressed, the electromagnetic vibrators 14, 14' and the drive motor 16 are started while the motor 37 of the drive unit 36 for the bucket conveyor 5 rotates to turn the bucket conveyor 5 and drop the products 12 such as peanuts from the discharging end of portion 6 of bucket conveyor 5 onto the distribution table 4 of the feeder 3 of the device 1'.

The products 12 dropped onto the distribution table 4 are dispersed circumferentially by the vibration of electromagnetic vibrator 14' and fed into radial troughs 7, 7... placed adjacent to the perimeter of distribution table 4. The products are then further discharged into the pool hoppers 8 corresponding to each radial trough 7 from the end of radial troughs 7 under the action of the electromagnetic vibrators 14 on each radial trough 7. The products are dropped into the measure or weighing hoppers 10 on a lower level by opening the trap doors 19 by operation of push rod 21 of an operating mechanism 18, where its weight is measured by the load cells 9, 9... supporting the measure hoppers 10. The measured weights are then read to a computer not shown, where necessary processing is performed to determine the combination of heads which provide the minimum positive overweight in relation to the required packaging weight of the products 12. The trap doors 20 on the measure hoppers 10 belonging to heads selected for the combination are then opened by the push rods 22 of operating mechanism 18 under computer command through a control unit not shown, to discharge the contents down the chutes 11, 11... to be transferred to the packaging stage which follows the conveyor 15 located below. When the measure hoppers 10 of the determined combination release their contents, the trap doors 19 of the pool hoppers 8 corresponding to these measure hoppers 10 are opened by the push rods 21 of the operating mechanism 18 under computer command through a control unit not shown, feeding the contents of these pool hoppers 8 into the empty measure hoppers 10 while the open topped pool hoppers 8 are continuously fed with the products 12 from the radial troughs 7 under vibrational feeding by the electromagnetic vibrators 14, to repeat the measuring process.

During this process, intermittent discharging by weight combination is made at the measurement section, this intermittent discharging being made in terms of weight. Intermittent feeding also takes place between the pool hoppers 8 and the measure hoppers 10.

As the products 12 are fed continuously by vibrational feeding from the radial troughs 7 to the pool hoppers 8 and also from distribution table 4 to the radial troughs 7, the weight of the products 12 fed onto distribution table 4 should, in principle, decrease linearly with time as shown by the line $C_1$ on the graph shown in Figure 11, taking time Tm on horizontal axis and weight W on vertical axis. However, the load cell 28 is actually subjected to the sum of $C_1$ and the vibrational component $C_2$, which is fed into the amplifier 33.

Component $C_2$ is removed by the low-pass filter 34 to isolate the trend component $C_1$ alone, which is fed into the control unit 35.

The conveyor starts with a weight $W_1+\alpha$ $(\alpha \doteqdot 2\sim 3\times W_1)$ where $W_1$ corresponds to the known rate of intermittent discharging at the weighing section, making allowance for lag and spare, there being provided a difference larger than $W_1$ between the starting weight below which the motor 37 of drive unit 36 for the bucket conveyor 5 is restarted and the stopping weight above which it is stopped. By also providing a timer control or control by weight signal to prevent inching, controlling of the feed weight of the products to always match the intermittent discharging weight at weighing section can be ensured.

Therefore as a result, the discharging and feeding of the products from distribution table 4 to the radial troughs 7 is made at a constant rate, and balance between the intermittent discharging at measurement section and the feeding at feeder 3 can be ensured.

For this to be realised, it is necessary for the driven speed of the feed conveyor 5 and the feed rate of the conveyor (the amount carried by each bucket) to be adjusted to match the average rate of feed, every time the discharging weight is altered.

Thus a condition where the determination of required weight in determining weight combination of the measure hoppers 10 by load cell 9 in the weighing section, or the determination of combination of heads can be made with ease, is sufficiently realised.

As will be described later, the signal picked up by the load cell 28 may also be fed through a high-pass filter to detect the strength and frequency of the vibration caused by the electromagnetic vibrators 14', to detect the feed rate from distribution table 4 to the radial troughs 7, 7... . In other words, the feed rate from each radial trough 7 to the pool hopper 8 can be detected to control the flow in the feeder 3 to match the intermittent discharging at the weighing section.

Figure 5 illustrates the embodiment shown in Figures 3 and 4 in schematic form, while Figures 6 through 10 illustrate other embodiments. The embodiment shown in Figure 6 is a variation to the embodiment shown in Figure 5, in which the load cell 28 is located above the balance weight 23 and the distribution table 4 is mounted on the load cell 28, there being no substantial difference from the embodiment described before.

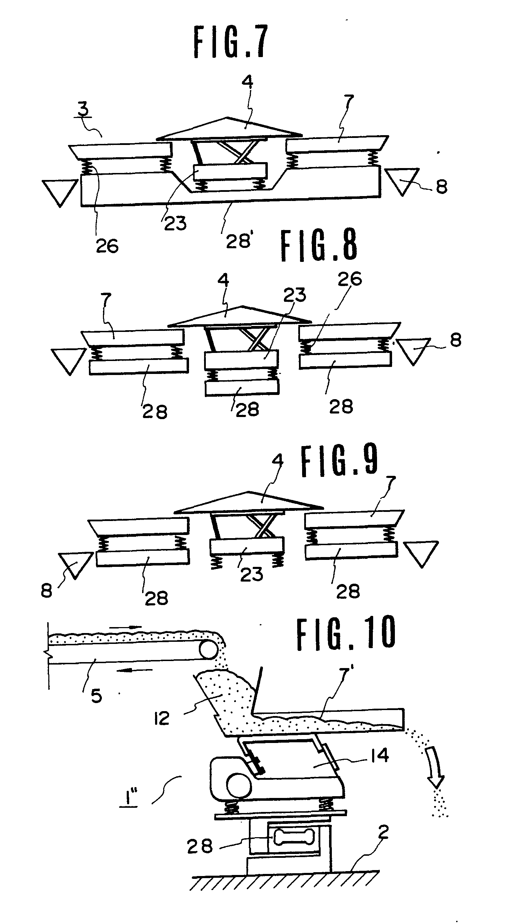

Figure 7 shows an embodiment in which not only the distribution table 4 but the whole feeder including the radial troughs 7, 7... is mounted upon the load cell 28' through the cushion springs 26. In this example, the object already transferred to the radial troughs 7 after overflowing from the perimeter of distribution table 4 is included in the weight measurement at the feeder 3.

In the embodiment shown in Figure 8, load cells 28 are provided not only on the distribution table 4, but also on each radial trough 7. In this example, not only the weight of products on distribution table 4 is measured, but it also enables monitoring the set of pool hopper 8 and measure hopper 10 more frequently selected in the weight combination, so that the result can be fed back by raising the oscillating frequency of the electromagnetic vibrator 14 on corresponding radial trough 7, or by shifting the position of discharging end of conveyor 5.

In the embodiment shown in Figure 9, no load cell is provided on the distribution table 4, but only on the radial troughs 7 around it. In this example, the weight of the products being transferred to each pool hopper 8 in feeder 3 is measured en route, to control the stopping and starting of motor 37 of drive unit 36 for conveyor 5 so as to match the flow rate of the object on the way to the weight of intermittent discharging at the weighing section, and also to control the electromagnetic vibrators 14 on the radial troughs 7 in order to control the rate of feed.

Whereas the aforementioned embodiments relate to devices with multiple heads in circular layout, the embodiment shown in Figure 10 relates to a single head unit. In a device 1'' in which a conveyor 5 faces a hopper for feeding a trough 7' which connects to a packaging conveyor belonging to the next stage, a load cell 28 is provided on the feeding trough 7' itself, to control the supply of the products 12 to the feeding trough 7'. As with the aforementioned embodiments, the weight of the products supplied to the feeding trough 7' is determined by extracting the trend component from the output signal of load cell 28 using a low-pass filter, to control the drive unit for conveyor 5.

Instead of controlling the conveyor drive unit by removing the high frequency component caused by the electromagnetic vibrator in feeder from the feed weight of the products detected by the load cell, the trend component of the feed weight may be removed, extracting the vibrational component caused by the electromagnetic vibrator and controlling this component, to control the feed during transfer to match the intermittent discharge at the weighting section.

**Claims**

1. A device for portioning products (12) into quantities having a predetermined weight, in which a feeder (3) located below a discharging end portion (6) of a conveyor (5) divides a fed amount of products (12) and conveys said divided portions to pool hoppers (8) connected to said feeder (3) and facing hoppers (10) supported on load cells (9) mounted on a framework (2) of a weighing device (1'), said feeder (3) comprising plural radial troughs (7) each connected to said pool hoppers (8), and a vibrating distribution table (4) connected to said radial troughs (7) at its perimeter, and said vibrating distribution table (4) being provided with a vibrator (14') supported on said framework (2) via a balance weight (23), and with a measuring device for measuring said fed amount of products (12), characterized in that said measuring device is a weight measuring device comprising a load cell (28) inserted between said balance weight (23) and said framework (2), and connected to a control unit (35) via a low-pass filter (34), said control unit (34) controlling said conveyor (5) in accordance with the weight of said products (12) disposed in said vibrating distribution table (4).

2. The device according to claim 1, characterized in that said vibrator is an electromagnetic vibrator.

3. The device according to claim 1, characterized in that said load cell (28) provided on said distribution table (4) is fixed to said balance weight (23) via a bracket (29) fixed to a plate (25) supporting said balance weight (23), and fixed to said framework (2) via a disc shaped mounting plate (27) fixed to said framework (2).

4. The device according to claim 1, characterized in that said weight measuring device is further provided on said radial troughs (7).

**Patentansprüche**

1. Vorrichtung zur Portionierung von Produkten (12) in ein vorbestimmtes Gewicht aufweisende Mengen, wobei eine unterhalb eines Austrag-Endabschnitts (6) eines Förderers (5) angeordnete Aufgabeeinrichtung (3) eine zugeführte Menge von Produkten (12) teilt und diese geteilten Portionen zu mit der erwähnten Aufgabeeinrichtung (3) verbundenen sowie an Meßdosen (9), die an einem Traggestell (2) einer Wägeeinrichtung (1') gehalten sind, angebrachten Trichtern (10) gegenüberliegenden Speichertrichtern (8) fördert, die erwähnte Aufgabeeinrichtung (3) mehrere radiale Schalen (7), von denen jede mit den genannten Speichertrichtern (8) verbunden ist, sowie einen schwingenden Verteilerteller (4), der an seinem Umfang mit den besagten radialen Schalen (7) in Verbindung steht, umfaßt und der erwähnte schwingende Verteilerteller (4) mit einem an dem genannten Traggestell (2) über eine Gegenmasse (23) gelagerten Vibrator (14') sowie einer die besagte zugeführte Menge an Produkten (12) messenden Meßeinrichtungen versehen ist dadurch gekennzeichnet, daß die erwähnte Meßeinrichtung eine Gewicht-Meßeinrichtung ist, die eine zwischen die besagte Gegenmasse (23) sowie das genannte Traggestell (2) eingesetzte Druckmeßdose (28), welche mit einem Steuergerät (35) über ein Tiefpaßfilter (34) verbunden ist, umfaßt, wobei dieses Steuergerät (35) den erwähnten Förderer (5) in Übereinstimmung mit dem Gewicht der besagten, in dem erwähnten schwingenden Verteilerteller (4) angeordneten Produkte (12) steuert.

2. Vorrichtung nach Anspruch 1, dadurch gekennzeichnet, daß der genannte Vibrator ein elektromagnetischer Vibrator ist.

3. Vorrichtung nach Anspruch 1, dadurch gekennzeichnet, daß die genannte, an dem erwähnten Verteilerteller (4) befindliche Druckmeßdose (28) an der besagten Gegenmasse (23) über einen an einer die besagte Gegenmasse (23) tragenden Platte (25) fest angebrachten Tragarm (29) befestigt und an dem genannten Traggestell (2) über eine an dem genannten Traggestell (2) fest angebrachte scheibenförmige Befestigungsplatte (27) festgehalten ist.

4. Vorrichtung nach Anspruch 1, dadurch gekennzeichnet, daß die erwähnte Gewicht-Meßeinrichtung ferner an den besagten radialen Schalen (7) vorgesehen ist.

**Revendications**

1. Dispositif pour diviser des produits (12) en portions de poids prédéterminé, dans lequel un convoyeur d'alimentation (3) situé au-dessous d'une partie d'extrémité de déchargement (6) d'un convoyeur (5) assure la division d'une quantité apportée de produits (12) et transporte lesdites portions divisées à des trémies de regroupement (8) reliées audit convoyeur (3) et situées en face de trémies (10) supportées sur des cellules dynamométriques (9) montées sur un châssis (2) d'un dispositif de pesage (1'), ledit convoyeur (3) comprenant plusieurs chenaux radiaux (7), chacun reliés auxdites trémies de regroupement (8), et une table de distribution vibrante (4) reliée auxdits chenaux radiaux (7) sur son périmètre, et ladite table de distribution vibrante (4) étant pourvue d'un vibrateur (14') supporté sur ledit châssis (2) par l'intermédiaire d'un contrepoids d'équilibrage (23), et muni d'un dispositif de mesure pour mesurer ladite quantité apportée de produits (12), caractérisé en ce que ledit dispositif de mesure est un dispositif de mesure de poids comprenant une cellule dynamométrique (28) insérée entre ledit contrepoids d'équilibrage (23) et ledit châssis (2), et reliée à une unité de commande (35) par l'intermédiaire d'un filtre passe-bas (34), ladite unité de commande (34) commandant ledit convoyeur (5) en fonction du poids desdits produits (12) disposés dans ladite table de distribution vibrante (4).

2. Dispositif selon la revendication 1, caractérisé en ce que ledit vibrateur est un vibrateur électromagnétique.

3. Dispositif selon la revendication 1, caractérisé en ce que ladite cellule dynamométrique (28) prévue sur ladite table de distribution (4) est fixée audit contrepoids d'équilibrage (23) à l'aide d'un support (29) fixé à une plaque (25) supportant ledit contrepoids d'équilibrage (23), et fixé audit châssis (2) par l'intermédiaire d'une plaque de montage en forme de disque (27) fixée audit châssis (2).

4. Dispositif selon la revendication 1, caractérisé en ce que ledit dispositif de mesure de poids est en outre prévu sur lesdits chenaux radiaux (7).

**EP 0 152 923 B1**

FIG.1

# FIG.2

# FIG.11

# FIG.3

# FIG.4

# FIG.5

# FIG.6

4

# FIG.7

# FIG.8

# FIG.9

# FIG.10